# EUROPEAN PATENT APPLICATION

(11) **EP 4 542 735 A1**
(43) Date of publication of application: **23.04.2025**
(21) Application number: 23865640.9
(22) Date of filing: 19.04.2023
(51) Int. Cl.: H01M 50/143, H01M 50/178, H01M 50/126, H01M 50/119, H01M 50/121, H01M 50/105

(54) **BATTERY CELL**

(30) Priority: 15.09.2022 KR 20220116414
(71) Applicant: SK On Co., Ltd., Seoul 03161 (KR)
(72) Inventor: JEONG, Kyung Hee, Daejeon 34124 (KR)
(74) Representative: Prüfer & Partner mbB Patentanwälte · Rechtsanwälte
(86) International application number: PCT/KR2023/005268
(87) International publication number: WO 2024/058332

(57) **Abstract**

A battery cell and a method of manufacturing the same are disclosed. The battery cell includes an electrode assembly (100) and a pouch unit (300) wrapping and accommodating the electrode assembly (100), and the pouch unit (300) includes an inner layer, an outer layer, and a metal layer disposed between the inner layer and the outer layer. The battery cell may comprise a battery cell body (11) including an accommodation portion (310) of the pouch unit (300) accommodating the electrode assembly (100) and the electrode assembly (100); an electrode lead (200) protruding from the battery cell body (11); a first battery cell sealing portion (16a) formed along a portion of a perimeter of the battery cell body (11), the first battery cell sealing portion (16a) including a part of a pair of first pouch sealing portions (321) extending from the accommodation portion (310) and having the inner layers that face each other and are coupled with the electrode lead (200) interposed therebetween; and a second battery cell sealing portion (16b) formed along another portion of the perimeter of the battery cell body (11), the second battery cell sealing portion (16b) including another part of the pair of first pouch sealing portions (321) and a pair of second pouch sealing portions (322) extending from the another part of the pair of first pouch sealing portions (321) and having the metal layers that face each other and are coupled.

## Description

### [Technical Field]

The present disclosure relates to a battery cell. More particularly, the present disclosure relates to a battery cell that sets a venting direction of internal gas in the event of a battery fire.

### [Background Art]

Due to repetitive charge/discharge processes and exposure to harsh environments, such as high temperature and high humidity, which occur during the manufacturing and use environment of a pouch battery cell, gas is continuously generated inside the pouch battery cell. This increases a pressure inside the pouch battery cell. Hence, when the pressure is equal to or greater than a threshold that the pouch battery cell can withstand, a weak portion of a pouch seal is broken and the pouch battery cell is damaged.

The weak portion of the pouch seal may be a sealing portion in which pouches facing each other are in contact with and coupled to each other. The pouches facing each other are coupled by polymerizing a resin, and thus the pouch can be sealed.

When a thermal runaway occurs in the battery cell, gas generated inside the battery cell may be vented to the outside through the broken sealing portion of the battery cell. Since the gas generated in the battery cell is at a high temperature, it is necessary to control a direction in which the gas generated inside the battery cell is vented to the outside.

(Patent Document 1) KR 10-2022-0037348 A

### [Disclosure]

### [Technical Problem]

An object of the present disclosure is to address the above-described and other problems.

Another object of the present disclosure is to provide a battery cell in which different coupling forces are given to different edges.

Another object of the present disclosure is to provide a battery cell in which a sealing portion formed by polymerization or fusion of a pouch sheet is disposed at an edge of the battery cell, and a sealing portion formed by welding of the pouch sheet is disposed at another edge of the battery cell.

Another object of the present disclosure is to provide a battery cell in which a venting direction of gas generated inside the battery cell in the event of a battery fire is set.

### [Technical Solution]

In order to achieve the above-described and other objects and needs, in one aspect of the present disclosure, there is provided a battery cell including an electrode assembly and a pouch unit wrapping and accommodating the electrode assembly, the pouch unit including an inner layer, an outer layer, and a metal layer disposed between the inner layer and the outer layer, the battery cell comprising a battery cell body including an accommodation portion of the pouch unit accommodating the electrode assembly and the electrode assembly; an electrode lead protruding from the battery cell body; a first battery cell sealing portion formed along a portion of a perimeter of the battery cell body, the first battery cell sealing portion including a part of a pair of first pouch sealing portions extending from the accommodation portion and having the inner layers that face each other and are coupled with the electrode lead interposed therebetween; and a second battery cell sealing portion formed along another portion of the perimeter of the battery cell body, the second battery cell sealing portion including another part of the pair of first pouch sealing portions and a pair of second pouch sealing portions extending from the another part of the pair of first pouch sealing portions and having the metal layers that face each other and are coupled.

A melting point of the metal layer may be higher than a melting point of the inner layer.

A melting point of the outer layer may be higher than the melting point of the inner layer and may be lower than the melting point of the metal layer.

The metal layer may be formed of a material including at least one of aluminum (Al), chromium (Cr), iron (Fe), manganese (Mn), copper (Cu), and stainless steel (SUS).

The inner layer may be formed of a material including at least one of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, Teflon, and glass fibers.

The outer layer may be formed of a material including at least one of polyethylene, polypropylene, polycarbonate, polyethylene terephthalate (PET), polyvinyl chloride, acrylic polymer, polyacrylonitrile, polyimide, and polyamide.

The pouch unit may include a first pouch face facing the electrode assembly and a second pouch face facing an outside of the battery cell, and the outer layer may form the second pouch face.

The metal layers of the pair of second pouch sealing portions may be coupled to each other by welding.

The inner layer may be formed of a material including a polymer, and the inner layers of the pair of first pouch sealing portions may be fused and coupled to each other by heat.

The electrode lead may include a first electrode lead positioned at an end of the battery cell body and a second electrode lead positioned at another end of the battery cell body.

The first battery cell sealing portion may include two first battery cell sealing portions respectively coupled to the first electrode lead and the second electrode lead.

The second battery cell sealing portion may include two second battery cell sealing portions that are connected to the two first battery cell sealing portions and face each other.

The accommodation portion may include two accommodation portions that accommodate the electrode assembly and face each other, and the pouch unit may include a connection portion connecting the two accommodation portions.

The connection portion may be formed along an edge of the battery cell and may be in close contact with the electrode assembly.

The second battery cell sealing portion may include a second pouch sealing portion head extending from the accommodation portion and a second pouch sealing portion tail extending from the second pouch sealing portion head and folded.

In another aspect of the present disclosure, there is provided a battery cell comprising an electrode assembly; and a pouch unit including an accommodation portion wrapping and accommodating the electrode assembly, wherein the pouch unit includes a first pouch sealing portion disposed along a portion of a perimeter of the electrode assembly and extending from the accommodation portion, the first pouch sealing portion being formed by sequentially stacking a 1-1 outer layer, a 1-1 metal layer, an inner layer, a 2-1 metal layer, and a 2-1 outer layer; and a second pouch sealing portion extending from at least a part of the first pouch sealing portion, the second pouch sealing portion being formed by sequentially stacking a 2-1 outer layer, a metal layer, and a 2-2 outer layer.

The 1-2 outer layer may extend from the 1-1 outer layer, the 2-2 outer layer may extend from the 2-1 outer layer, and the metal layer may extend from the 1-1 metal layer and the 2-1 metal layer.

The battery cell may further comprise an electrode lead extending from the electrode assembly and protruding from the pouch unit, and the first pouch sealing portion may be connected to the electrode lead.

The accommodation portion may include two accommodation portions that accommodate the electrode assembly and face each other, and the pouch unit may include a connection portion connecting the two accommodation portions.

The connection portion may be formed along an edge of the battery cell and may be in close contact with the electrode assembly.

### [Advantageous Effects]

Effects of a battery cell and a method of manufacturing the same according to the present disclosure are described as follows.

According to at least one aspect of the present disclosure, a battery cell in which different coupling forces are given to different edges can be provided.

According to at least one aspect of the present disclosure, a battery cell, in which a sealing portion formed by polymerization or fusion of a pouch sheet is disposed at an edge of the battery cell, and a sealing portion formed by welding of the pouch sheet is disposed at another edge of the battery cell, can be provided.

According to at least one aspect of the present disclosure, a battery cell, in which a venting direction of gas generated inside the battery cell in the event of a battery fire is set, can be provided.

Additional scope of applicability of the present disclosure will become apparent from the detailed description given blow. However, it should be understood that the detailed description and specific examples such as embodiments of the present disclosure are given merely by way of example, since various changes and modifications within the spirit and scope of the present disclosure will become apparent to those skilled in the art from the detailed description.

### [Description of Drawings]

FIG. 1a is a perspective view of a battery cell according to an embodiment of the present disclosure.
FIG. 1b illustrates a battery cell with a connection unit.
FIG. 2 is an exploded perspective view of a battery cell according to an embodiment of the present disclosure.
FIG. 3 illustrates a cross section of a pouch sheet of FIG. 2 taken along C1-C2.
FIG. 4 illustrates a cross section of a pouch sheet of FIG. 2 taken along D1-D2.
FIG. 5 illustrates a cross section of a pouch sheet of FIG. 2 taken along E1-E2.
FIG. 6 illustrates a cross section of a battery cell of FIG. 1a taken along B1-B2.
FIG. 7 illustrates a cross section of a battery cell of FIG. 1a taken along F1-F2.
FIG. 8 enlargedly illustrates a part G of FIG. 7.
FIG. 9 illustrates a cross section of a battery cell of FIG. 1a taken along A1-A2.
FIG. 10a illustrates, as an enlarged view of a part H of FIG. 9, that a second pouch sealing portion forms a battery cell edge.
FIG. 10b illustrates, as an enlarged view of a part H of FIG. 9, that a first pouch sealing portion forms a battery cell edge.
FIG. 11 illustrates that a second battery cell sealing portion illustrated in FIG. 9 is folded.
FIG. 12 enlargedly illustrates a part I of FIG. 11.

### [Mode for Invention]

Reference will now be made in detail to embodiments of the disclosure, examples of which are illustrated in the accompanying drawings. Wherever possible, the same reference numbers will be used throughout the drawings to refer to the same or like parts. In general, a suffix such as "module" and "unit" may be used to refer to elements or components. Use of such a suffix herein is merely intended to facilitate description of the present disclosure, and the suffix itself is not intended to give any special meaning or function. It will be noted that a detailed description of known arts will be omitted if it is determined that the detailed description of the known arts can obscure the embodiments of the disclosure. The accompanying drawings are used to help easily understand various technical features and it should be understood that embodiments presented herein are not limited by the accompanying drawings. As such, the present disclosure should be construed to extend to any alterations, equivalents and substitutes in addition to those which are particularly set out in the accompanying drawings.

The terms including an ordinal number such as first, second, etc. may be used to describe various components, but the components are not limited by such terms. The terms are used only for the purpose of distinguishing one component from other components.

When any component is described as "being connected" or "being coupled" to other component, this should be understood to mean that another component may exist between them, although any component may be directly connected or coupled to the other component. In contrast, when any component is described as "being directly connected" or "being directly coupled" to other component, this should be understood to mean that no component exists between them.

A singular expression can include a plural expression as long as it does not have an apparently different meaning in context.

In the present disclosure, terms "include" and "have" should be understood to be intended to designate that illustrated features, numbers, steps, operations, components, parts or combinations thereof are present and not to preclude the existence of one or more different features, numbers, steps, operations, components, parts or combinations thereof, or the possibility of the addition thereof.

In the drawings, sizes of the components may be exaggerated or reduced for convenience of explanation. For example, the size and the thickness of each component illustrated in the drawings are arbitrarily illustrated for convenience of explanation, and thus the present disclosure is not limited thereto unless specified as such.

If any embodiment is implementable differently, a specific order of processes may be performed differently from the order described. For example, two consecutively described processes may be performed substantially at the same time, or performed in the order opposite to the described order.

In the following embodiments, when layers, areas, components, etc. are connected, the following embodiments include both the case where layers, areas, and components are directly connected, and the case where layers, areas, and components are indirectly connected to other layers, areas, and components intervening between them. For example, when layers, areas, components, etc. are electrically connected, the present disclosure includes both the case where layers, areas, and components are directly electrically connected, and the case where layers, areas, and components are indirectly electrically connected to other layers, areas, and components intervening between them.

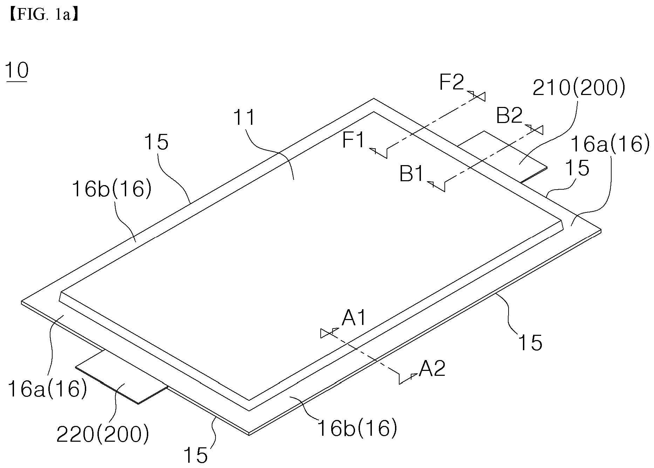

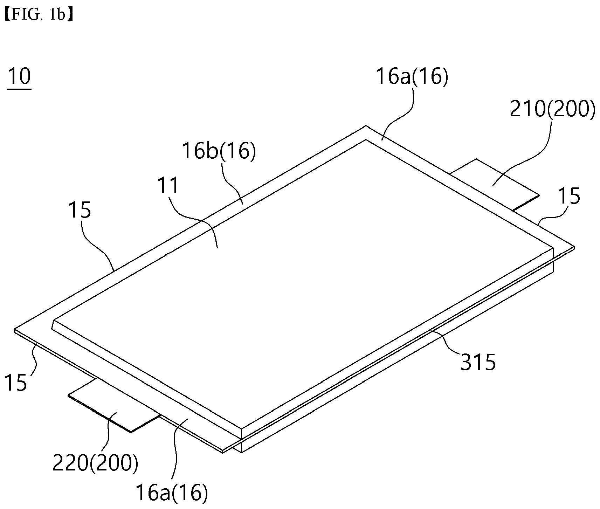

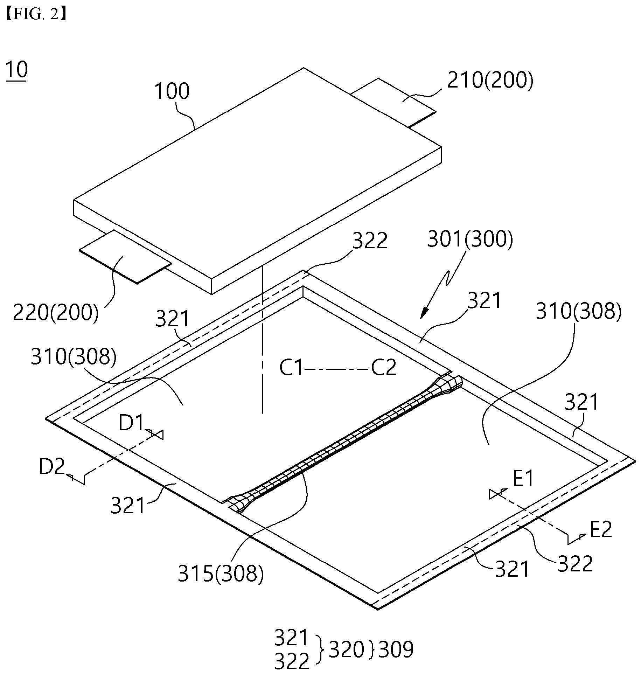

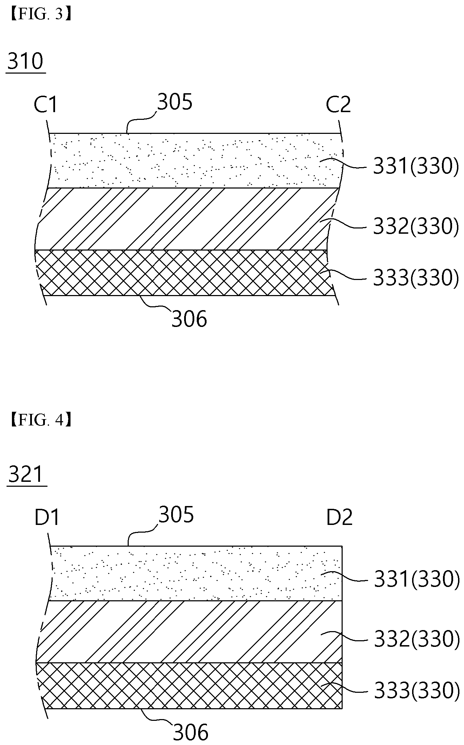

FIG. 1a is a perspective view of a battery cell 10 according to an embodiment of the present disclosure. FIG. 1b illustrates a battery cell with a connection portion. FIG. 2 is an exploded perspective view of the battery cell 10 according to an embodiment of the present disclosure. FIG. 3 illustrates a cross section of a pouch sheet of FIG. 2 taken along C1-C2.

Referring to FIGS. 1a to 3, the battery cell 10 may include an electrode assembly 100. The battery cell 10 may include a pouch unit 300 accommodating the electrode assembly 100. The electrode assembly 100 may be wrapped by the pouch unit 300.

The electrode assembly 100 may be charged. When the electrode assembly 100 is charged, electrical energy of the electrode assembly 100 may increase. The electrode assembly 100 may be discharged. When the electrode assembly 100 is discharged, the electrical energy of the electrode assembly 100 may decrease. The electrode assembly 100 may be referred to as a "jelly roll."

The electrode assembly 100 may roughly form a hexahedral shape. The electrode assembly 100 may form a flat shape. For example, the electrode assembly 100 may form a flat hexahedral shape. For example, the electrode assembly 100 may form a shape that extends from an end and leads to another end.

The battery cell 10 may include an electrode lead 200. A plurality of electrode leads 200 may be provided. For example, the electrode leads 200 may include a first electrode lead 210 and a second electrode lead 220. The electrode lead 200 may be formed of a material including a metal. A longitudinal direction of the battery cell 10 may be parallel to a direction from the first electrode lead 210 toward the second electrode lead 220.

The electrode lead 200 may be connected to the electrode assembly 100. The first electrode lead 210 may be connected to an end of the electrode assembly 100. The first electrode lead 210 may be positioned at an end of a battery cell body 11. The second electrode lead 220 may be connected to another end of the electrode assembly 100. The second electrode lead 220 may be positioned at another end of the battery cell body 11.

The electrode lead 200 may form a shape protruding from the electrode assembly 100. The electrode lead 200 may form a shape protruding from the battery cell body 11. The electrode lead 200 may protrude to the outside of the pouch unit 300. For example, a part of the electrode lead 200 may extend from the electrode assembly 100 and be accommodated in the pouch unit 300. For example, another part of the electrode lead 200 may extend from the part of the electrode lead 200 and be positioned outside the battery cell body 11.

The pouch unit 300 may include a pouch sheet 301. The pouch sheet 301 may have a sheet shape. The pouch sheet 301 may be flexible. The pouch sheet 301 may form a face.

The pouch unit 300 may include a first pouch face 305. For example, the pouch sheet 301 may form the first pouch face 305. The first pouch face 305 may be a face of the pouch sheet 301. The first pouch face 305 may form and face an internal space of the battery cell 10. The first pouch face 305 may face and cover the electrode assembly 100.

The pouch unit 300 may include a second pouch face 306. The second pouch face 306 may be another face of the pouch sheet 301. The second pouch face 306 may form an outer face of the battery cell 10. The second pouch face 306 may be a face positioned on an opposite side of the first pouch face 305.

The pouch sheet 301 may be formed by stacking a plurality of layers. For example, the pouch sheet 301 may include a layer structure 330.

The layer structure 330 may include a first layer 331. The first layer 331 may form the first pouch face 305. A face of the first layer 331 may form the first pouch face 305. In this context, the first layer 331 may be referred to as an "inner layer."

The layer structure 330 may include a second layer 332. The second layer 332 may face another face of the first layer 331. A face of the second layer 332 may be in contact with the another face of the first layer 331.

The layer structure 330 may include a third layer 333. The third layer 333 may face another face of the second layer 332. A face of the third layer 333 may be in contact with the another face of the second layer 332. Another face of the third layer 333 may form the second pouch face 306. In this context, the third layer 333 may be referred to as an "outer layer."

The first layer 331 may be formed of a material including a polymer. For example, the first layer 331 may include a thermally polymerizable compound. When heat is applied to the thermally polymerizable compound, a polymerization or crosslinking reaction may occur in the thermally polymerizable compound. In this case, if heat is applied in a state where two different first layers 331 are in contact with each other, the two different first layers 331 may be bonded. When heat is applied to the first layer 331, the first layer 331 may be in a molten state, and a pair of first layers 331 may be in contact with each other and fused.

The first layer 331 may be formed of a material including at least one of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, Teflon, and glass fibers. The first layer 331 may have a single layer structure or a multi-layer structure including two or more materials.

The second layer 332 may include metal. For example, the second layer 332 may be formed of a material including at least one of aluminum (Al), chromium (Cr), iron (Fe), manganese (Mn), copper (Cu), stainless steel (SUS), and their alloys. The second layer 332 can achieve a good mechanical strength, formability, and a moisture blocking effect. In this context, the second layer 332 may be referred to as a "metal layer."

The third layer 333 can protect the battery cell 10 from the outside. The third layer 333 may be formed of a film. The third layer 333 may be formed of a material including at least one of polyethylene, polypropylene, polycarbonate, polyethylene terephthalate (PET), polyvinyl chloride, acrylic polymer, polyacrylonitrile, polyimide, and polyamide. For example, the third layer 333 may be formed of a material including polyethylene terephthalate (PET).

A melting point or fusing point of the third layer 333 may be higher than a melting point or fusing point of the first layer 331. For example, when heat is provided to the third layer 333, the heat may pass through the second layer 332 and reach the first layer 331. In this case, the third layer 333 may not melt, and the first layer 331 may be in a melted state.

The pouch sheet 301 may be molded. For example, when the pouch sheet 301 is press-processed, a shape of the pouch sheet 301 may be formed. For example, the pouch unit 300 may be concavely formed on a face of the pouch sheet 301.

For example, the pouch unit 300 may include an accommodation portion 310. The accommodation portion 310 may accommodate the electrode assembly 100. The accommodation portion 310 may face and contact the electrode assembly 100. The accommodation portion 310 may be concave on the first pouch face 305. The accommodation portion 310 may be convex on the second pouch face 306. For another example, the accommodation portion 310 is not concave and may be flat.

A plurality of accommodation portions 310 may be provided. For example, two accommodation portions 310 may be provided. The two accommodation portions 310 may be respectively formed on the two pouch sheets 301. Referring to FIG. 1a, the two pouch sheets 301 may be coupled to form two facing second battery cell sealing portions 16b.

Referring to FIGS. 1b and 2, the two accommodation portions 310 may be formed on one pouch sheet 301. The pouch unit 300 may include a connection portion 315. The connection portion 315 may be positioned between the different accommodation portions 310 and connect the different accommodation portions 310. In other words, the connection portion 315 may be positioned between the two accommodation portions 310 and connect the two accommodation portions 310.

The connection portion 315 may form an edge of the battery cell 10 (see FIG. 1b). For example, the connection portion 315 may be positioned opposite the second battery cell sealing portion 16b.

The connection portion 315 may form a surface formed on the edge of the battery cell 10 (see FIG. 1b). The connection portion 315 may be in close contact with the electrode assembly 100. In this context, the connection portion 315 may be referred to as a "close contact portion."

For example, the connection portion 315 may be in contact with a cooling plate. For example, heat generated in the electrode assembly 100 may be transferred to the cooling plate through the connection portion 315. Accordingly, the connection portion 315 may be a passage for discharging the heat generated in the electrode assembly 100 to the outside.

The pouch unit 300 may include a pouch inner region 308 and a pouch edge region 309. For example, the pouch sheet 301 may be divided into the pouch inner region 308 and the pouch edge region 309. The pouch edge region 309 may form a shape that surrounds the pouch inner region 308. The pouch edge region 309 may be formed along an edge of the pouch sheet 301. The accommodation portion 310 and the connection portion 315 may be formed in the pouch inner region 308.

After the electrode assembly 100 is accommodated in the accommodation portion 310, the pouch sheet 301 may be folded. The pouch sheet 301 may be folded at the connection portion 315. For example, the electrode assembly 100 may be disposed and accommodated between a pair of accommodation portions 310.

The battery cell 10 may include the battery cell body 11. The battery cell body 11 may indicate a part of the battery cell 10 in which the electrode assembly 100 is positioned. For example, the battery cell body 11 may include the accommodation portion 310 and the electrode assembly 100.

The battery cell 10 may include a battery cell edge 15. The battery cell edge 15 may form an edge of the battery cell 10. The battery cell edge 15 may be formed or positioned along a perimeter of the battery cell body 11. The battery cell edge 15 may be formed by the pouch sheet 301.

The battery cell 10 may include a battery cell edge portion 16. The battery cell edge portion 16 may be formed or positioned along the battery cell edge 15. The battery cell edge portion 16 may be positioned or formed between the battery cell edge 15 and the battery cell body 11. The battery cell edge portion 16 may be formed by the pouch sheet 301.

For example, the battery cell edge portion 16 may be formed by coupling the pouch sheets 301 facing each other. In this context, the battery cell edge portion 16 may be referred to as a "battery cell sealing portion."

The pouch sheet 301 may include a first pouch sealing portion 321. For example, two facing first pouch sealing portions 321 may be coupled to each other to form a first battery cell sealing portion 16a. The first pouch sealing portion 321 may form at least a part of the pouch edge region 309. For example, the first pouch sealing portion 321 may be formed along a perimeter of the pouch sheet 301.

The first battery cell sealing portion 16a may be connected to the electrode lead 200. For example, the electrode lead 200 may be positioned between the two facing first pouch sealing portions 321.

A plurality of first battery cell sealing portions 16a may be provided. For example, one of the two first battery cell sealing portions 16a may be connected to the first electrode lead 210. For example, the other of the two first battery cell sealing portions 16a may be connected to the second electrode lead 220.

The pouch sheet 301 may include a second pouch sealing portion 322. The second pouch sealing portion 322 may extend from the first pouch sealing portion 321 and be connected to the edge of the pouch sheet 301.

For example, a pair of first pouch sealing portions 321 facing each other may be coupled to each other, and a pair of second pouch sealing portions 322 facing each other may be coupled to each other, thereby forming the second battery cell sealing portion 16b.

The second pouch sealing portion 322 may form at least a part of the pouch edge region 309. For example, the second pouch sealing portion 322 may be formed along a portion of the perimeter of the pouch sheet 301. For example, the second pouch sealing portion 322 may be formed along an edge formed in the longitudinal direction of the battery cell 10 in the perimeter of the pouch sheet 301.

In other words, the second pouch sealing portion 322 may be formed along a remaining edge excluding an edge, at which the electrode lead 200 is formed, from the perimeter of the pouch sheet 301.

For another example, the second pouch sealing portion 322 may be formed at a corner of the pouch sheet 301. For another example, the second pouch sealing portion 322 may be formed along a portion of the edge formed in the longitudinal direction of the battery cell 10 in the perimeter of the pouch sheet 301.

The second battery cell sealing portion 16b may be connected to the first battery cell sealing portion 16a. A pouch sealing portion 320 may indicate at least one of the first pouch sealing portion 321 and the second pouch sealing portion 322.

FIG. 4 illustrates a cross section of a pouch sheet of FIG. 2 taken along D1-D2.

Referring to FIG. 4, the first layer 331 of the first pouch sealing portion 321 may form the first pouch face 305. Referring to FIGS. 1a to 4, the first battery cell sealing portion 16a may be formed by coupling the two facing first pouch sealing portions 321. For example, the first battery cell sealing portion 16a may be formed by polymerizing and coupling the respective first layers 331 of the two first facing pouch sealing portions 321.

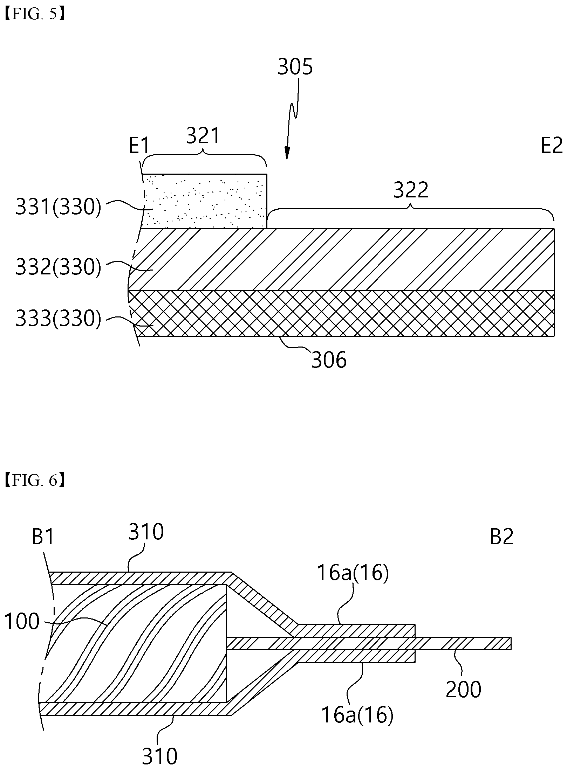

FIG. 5 illustrates a cross section of a pouch sheet of FIG. 2 taken along E1-E2.

Referring to FIG. 5, the second pouch sealing portion 322 may extend from the first pouch sealing portion 321 toward the edge of the pouch sheet 301 (see FIG. 2). For example, the second pouch sealing portion 322 may be formed by extending the second layer 332 and the third layer 333 of the first pouch sealing portion 321. In other words, the second pouch sealing portion 322 may extend from the first pouch sealing portion 321 in a state where the first layer 331 is excluded.

The first layer 331 of the first pouch sealing portion 321 may form the first pouch face 305. The second layer 332 of the second pouch sealing portion 322 may form the first pouch face 305.

The second battery cell sealing portion 16b (see FIGS. 1a and 1b) may be formed by facing and coupling the two facing first pouch sealing portions 321 and facing and coupling the two facing second pouch sealing portions 322. For example, the second battery cell sealing portion 16b (see FIGS. 1a and 1b) may be formed by coupling a pair of first pouch sealing portions 321 and then coupling a pair of second pouch sealing portions 322.

FIG. 6 illustrates a cross section of a battery cell of FIG. 1a taken along B1-B2.

Referring to FIG. 6, the first pouch sealing portion 321 (see FIG. 2) may form the first battery cell sealing portion 16a. The first pouch sealing portion 321 (see FIG. 2) may be coupled to the electrode lead 200. For example, the first pouch sealing portion 321 (see FIG. 2) may be coupled to the electrode lead 200 in a state where the first pouch sealing portion 321 (see FIG. 2) is melted by heat. If a thermal runaway phenomenon occurs or a fire occurs inside the battery cell 10 (see FIGS. 1a and 1b), the sealing of the first battery cell sealing portion 16a may be released.

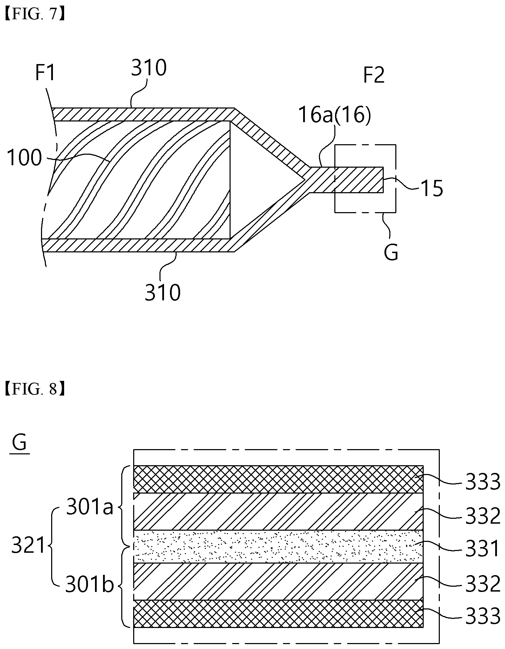

FIG. 7 illustrates a cross section of a battery cell of FIG. 1a taken along F1-F2.

Referring to FIG. 7, the first pouch sealing portion 321 (see FIG. 2) may form the first battery cell sealing portion 16a. The two facing first pouch sealing portions 321 (see FIG. 2) may be coupled to each other to form the first battery cell sealing portion 16a.

FIG. 8 enlargedly illustrates a part G of FIG. 7.

Referring to FIG. 8, when the respective first layers 331 of the two facing first pouch sealing portions 321 (see FIG. 2) are coupled to each other, the first battery cell sealing portion 16a (see FIG. 7) may be formed.

The pouch sheet 301 (see FIG. 2) may include a first pouch sheet part 301a and a second pouch sheet part 301b facing each other. The first pouch sheet part 301a and the second pouch sheet part 301b may form the first pouch sealing portion 321.

The first pouch sheet part 301a and the second pouch sheet part 301b may be coupled to each other. For example, the first layer 331 of the first pouch sheet part 301a may be coupled to the first layer 331 of the second pouch sheet part 301b.

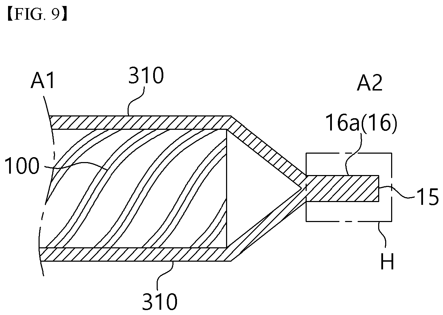

FIG. 9 illustrates a cross section of a battery cell of FIG. 1a taken along A1-A2.

Referring to FIG. 9, the second pouch sealing portion 322 (see FIG. 2) may form the second battery cell sealing portion 16b. The two facing second pouch sealing portions 322 (see FIG. 2) may be coupled to each other to form the second battery cell sealing portion 16b.

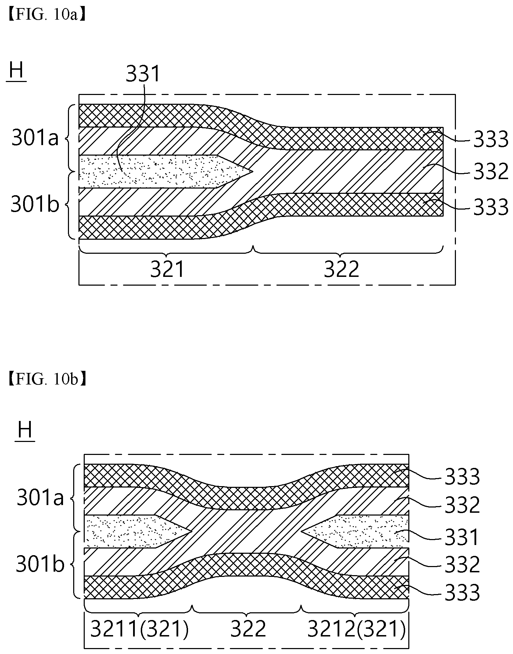

FIG. 10a illustrates, as an enlarged view of a part H of FIG. 9, that a second pouch sealing portion forms a battery cell edge.

Referring to FIG. 10a, when the respective first layers 331 of the two facing first pouch sealing portions 321 are coupled to each other, and the respective second layers 332 of the two facing second pouch sealing portions 322 are coupled to each other, the second battery cell sealing portion 16b (see FIG. 9) may be formed. The second pouch sealing portion 322 may form the battery cell edge 15 (see FIGS. 1a, 1b and 9).

The first pouch sheet part 301a and the second pouch sheet part 301b may form the second pouch sealing portion 322. The first pouch sheet part 301a and the second pouch sheet part 301b may be coupled to each other. For example, the second layer 332 of the first pouch sheet part 301a may be coupled to the second layer 332 of the second pouch sheet part 301b.

Referring to FIGS. 9 and 10a, the second pouch sealing portion 322 may extend outward from the first pouch sealing portion 321. That is, after the first layers 331 of a pair of first pouch sealing portions 321 are coupled to each other, the second layers 332 of a pair of second pouch sealing portions 322 extending from the pair of first pouch sealing portions 321 may be coupled to each other by welding or the like.

FIG. 10b illustrates, as an enlarged view of a part H of FIG. 9, that a first pouch sealing portion forms a battery cell edge.

Referring to FIG. 10b, the first pouch sealing portion 321 may include a first inner pouch sealing portion 3211 and a first outer pouch sealing portion 3212. The two first outer pouch sealing portions 3212 facing each other may form the battery cell edge 15 (see FIGS. 1a, 1b and 9).

Referring to FIGS. 9 and 10b, the second pouch sealing portion 322 may be positioned between the first inner pouch sealing portion 3211 and the first outer pouch sealing portion 3212. For example, after the first layers 331 of the two facing first pouch sealing portions 321 are coupled to each other, the two facing second layers 332 may be coupled to each other at a middle point of the first pouch sealing portion 321 by welding or the like to form the second pouch sealing portion 322.

Referring to FIGS. 9, 10a and 10b, the outer layer 333 of the first pouch sealing portion 321 of the first pouch sheet part 301a may be referred to as a "1-1 outer layer." The outer layer 333 of the first pouch sealing portion 321 of the second pouch sheet part 301b may be referred to as a "2-1 outer layer."

The metal layer 332 of the first pouch sealing portion 321 of the first pouch sheet part 301a may be referred to as a "1-1 metal layer." The metal layer 332 of the first pouch sealing portion 321 of the second pouch sheet part 301b may be referred to as a "2-1 metal layer."

The inner layer 331 of the first pouch sheet part 301a and the inner layer 331 of the second pouch sheet part 301b may be coupled to each other in the first pouch sealing portion 321 to form a layer.

The outer layer 333 of the second pouch sealing portion 322 of the first pouch sheet part 301a may be referred to as a "1-2 outer layer." The 1-2 outer layer 333 of the second pouch sealing portion 322 may extend from the 1-1 outer layer 333 of the first pouch sealing portion 321.

The outer layer 333 of the second pouch sealing portion 322 of the second pouch sheet part 301b may be referred to as a "2-2 outer layer." The 2-2 outer layer 333 of the second pouch sealing portion 322 may extend from the 2-1 outer layer 333 of the first pouch sealing portion 321.

The metal layer 332 of the first pouch sheet part 301a and the metal layer 332 of the second pouch sheet part 301b may be coupled to each other in the second pouch sealing portion 322 to form a layer.

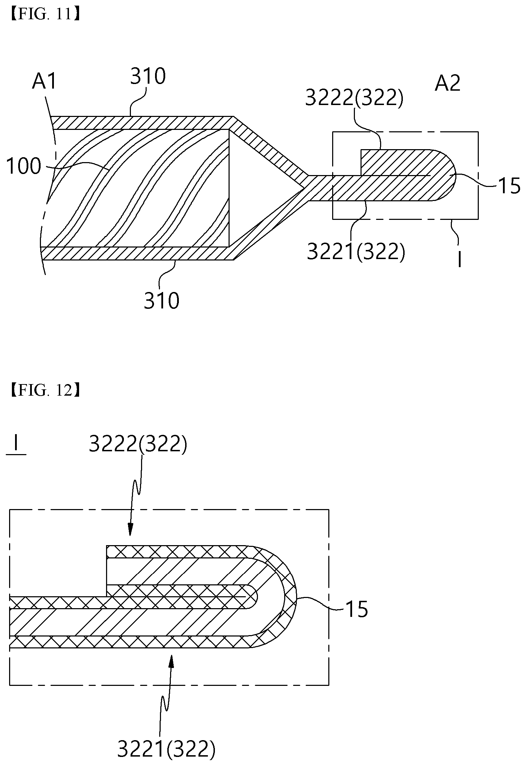

FIG. 11 illustrates that a second battery cell sealing portion illustrated in FIG. 9 is folded.

Referring to FIG. 11, the second battery cell sealing portion 16b (see FIG. 9) may be folded. The second pouch sealing portion 322 may include a second pouch sealing portion head 3221. The second pouch sealing portion head 3221 may extend from the accommodation portion 310.

The second pouch sealing portion 322 may include a second pouch sealing portion tail 3222. The second pouch sealing portion tail 3222 may be folded from the second pouch sealing portion head 3221 to form an extended shape. The second pouch sealing portion tail 3222 may be coupled to the second pouch sealing portion head 3221 while facing the second pouch sealing portion head 3221. For example, the second pouch sealing portion head 3221 and the second pouch sealing portion tail 3222 may be stacked in a thickness direction of the battery cell 10 (see FIGS. 1a and 1b). The thickness direction of the battery cell 10 (see FIGS. 1a and 1b) may be parallel to a direction in which the two accommodation portions 310 (see FIG. 2) are stacked.

FIG. 12 enlargedly illustrates a part I of FIG. 11.

Referring to FIG. 12, the third layer 333 (see FIG. 10a) of the second pouch sealing portion head 3221 may face the third layer 333 (see FIG. 10a) of the second pouch sealing portion tail 3222.

For example, the third layer 333 (see FIG. 10a) of the second pouch sealing portion head 3221 may face and be coupled to the third layer 333 (see FIG. 10a) of the second pouch sealing portion tail 3222.

Referring to FIGS. 1a to 12, the battery cell sealing portion 16 may be divided into two types. For example, the battery cell sealing portion 16 may include the first battery cell sealing portion 16a and the second battery cell sealing portion 16b.

The first battery cell sealing portion 16a may be coupled to the electrode lead 200. In FIG. 1, the first electrode lead 210 and the second electrode lead 220 are positioned at different edges of the battery cell 10, and thus different first battery cell sealing portions 16a may be formed. For another example, when the first electrode lead 210 and the second electrode lead 220 are positioned at one edge, one first battery cell sealing portion 16a may be formed.

The second battery cell sealing portion 16b may be connected to the first battery cell sealing portion 16a or may be spaced apart from and face the first battery cell sealing portion 16a. The second battery cell sealing portion 16b may not be connected to the electrode lead 200.

The second battery cell sealing portion 16b may be formed along an edge of the battery cell body 11. For another example, the second battery cell sealing portion 16b may be formed along a portion of an edge of the battery cell body 11.

The second battery cell sealing portion 16b may be formed along two edges of the battery cell body 11. For example, the two second battery cell sealing portions 16b may be formed along two edges of the battery cell body 11, respectively. For example, the two second battery cell sealing portions 16b may be positioned opposite each other.

The battery cell sealing portion 16 may include a pair of first pouch sealing portions 321 that are formed along the perimeter of the battery cell body 11 and include the first layers 331 facing each other and coupled. The battery cell sealing portion 16 may include a pair of second pouch sealing portions 322 that extend from a part of the pair of first pouch sealing portions 321 and include the second layers 332 facing each other and coupled. The first pouch sealing portion 321 may extend from the accommodation portion 310.

The first battery cell sealing portion 16a may be formed along a portion of the perimeter of the battery cell body 11. The first battery cell sealing portion 16a may include a part of a pair of first pouch sealing portions 321. The first battery cell sealing portion 16a may be connected to the electrode lead 200.

The second battery cell sealing portion 16b may include another part of the pair of first pouch sealing portions 321. The second battery cell sealing portion 16b may include a pair of second pouch sealing portions 322 extending from another part of the pair of first pouch sealing portions 321. The second layers 332 of the pair of second pouch sealing portions 322 may face each other and be coupled.

The melting point of the first layer 331 may be, for example, 140 °C to 160 °C. A melting point of the second layer 332 may be, for example, 1000 °C or more. Therefore, if a fire or a thermal runaway occurs inside the battery cell 10, the first battery cell sealing portion 16a may be broken earlier than the second battery cell sealing portion 16b, and heat or gas generated inside the battery cell 10 may pass through the broken first battery cell sealing portion 16a and may be vented to the outside.

A direction in which gas or heat formed inside the battery cell 10 is vented can be determined through the arrangement of the first battery cell sealing portion 16a and the second battery cell sealing portion 16b. For example, when the first battery cell sealing portion 16a is formed at the electrode lead 200 and the second battery cell sealing portion 16b is connected to the first battery cell sealing portion 16a, the gas or heat formed inside the battery cell 10 can be vented to the outside in a direction in which the electrode lead 200 protrudes.

That is, when a fire or thermal runaway occurs inside the battery cell 10, a venting direction of the battery cell 10 can be set. As a result, a battery module including a plurality of stacked battery cells 10 can be designed more safely.

Some embodiments or other embodiments of the present disclosure described above are not mutually exclusive or distinct from each other. Configurations or functions of some embodiments or other embodiments of the present disclosure described above can be used together or combined with each other.

It is apparent to those skilled in the art that the present disclosure can be embodied in other specific forms without departing from the spirit and essential features of the present disclosure. Accordingly, the above detailed description should not be construed as limiting in all aspects and should be considered as illustrative. The scope of the present disclosure should be determined by rational interpretation of the appended claims, and all modifications within an equivalent scope of the present disclosure are included in the scope of the present disclosure.

## Claims

1. A battery cell (10) including an electrode assembly (100) and a pouch unit (300) wrapping and accommodating the electrode assembly (100), the pouch unit (300) including an inner layer, an outer layer, and a metal layer disposed between the inner layer and the outer layer, the battery cell (10) comprising:
a battery cell body (11) including the electrode assembly (100) and an accommodation portion (310) of the pouch unit (300) accommodating the electrode assembly (100);
an electrode lead (200) protruding from the battery cell body (11);
a first battery cell sealing portion (16a) formed along a portion of a perimeter of the battery cell body (11), the first battery cell sealing portion (16a) including a part of a pair of first pouch sealing portions (321) extending from the accommodation portion (310), wherein the inner layers of the part of the pair of first pouch sealing portions (321) face each other and are coupled with the electrode lead (200) interposed therebetween; and
a second battery cell sealing portion (16b) formed along another portion of the perimeter of the battery cell body (11), the second battery cell sealing portion (16b) including another part of the pair of first pouch sealing portions (321) and a pair of second pouch sealing portions (322) extending from the another part of the pair of first pouch sealing portions (321), wherein the metal layers of the pair of second pouch sealing portions (322) face each other and are coupled.

2. The battery cell (10) of claim 1, wherein a melting point of the metal layer is higher than a melting point of the inner layer.

3. The battery cell (10) of claim 2, wherein a melting point of the outer layer is higher than the melting point of the inner layer and is lower than the melting point of the metal layer.

4. The battery cell (10) of claim 1, wherein the metal layer is formed of a material including at least one of aluminum (Al), chromium (Cr), iron (Fe), manganese (Mn), copper (Cu), and stainless steel (SUS).

5. The battery cell (10) of claim 1, wherein the inner layer is formed of a material including at least one of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, Teflon, and glass fibers.

6. The battery cell (10) of claim 1, wherein the outer layer is formed of a material including at least one of polyethylene, polypropylene, polycarbonate, polyethylene terephthalate (PET), polyvinyl chloride, acrylic polymer, polyacrylonitrile, polyimide, and polyamide.

7. The battery cell (10) of claim 1, wherein the pouch unit (300) includes a first pouch face (305) facing the electrode assembly (100) and a second pouch face (306) facing an outside of the battery cell (10), and
wherein the outer layer forms the second pouch face (306).

8. The battery cell (10) of claim 1, wherein the metal layers of the pair of second pouch sealing portions (322) are coupled to each other by welding.

9. The battery cell (10) of claim 1, wherein the inner layer is formed of a material including a polymer, and
wherein the inner layers of the pair of first pouch sealing portions (321) are fused and coupled to each other by heat.

10. The battery cell (10) of claim 1, wherein the electrode lead (200) includes:
a first electrode lead (210) positioned at an end of the battery cell body (11); and
a second electrode lead (220) positioned at another end of the battery cell body (11).

11. The battery cell (10) of claim 10, wherein the first battery cell sealing portion (16a) includes two first battery cell sealing portions (16a) respectively coupled to the first electrode lead (210) and the second electrode lead (220).

12. The battery cell (10) of claim 11, wherein the second battery cell sealing portion (16b) includes two second battery cell sealing portions (16b) that are connected to the two first battery cell sealing portions (16a) and face each other.

13. The battery cell (10) of claim 1, wherein the accommodation portion (310) includes two accommodation portions (310) that accommodate the electrode assembly (100) and face each other, and
wherein the pouch unit (300) includes a connection portion (315) connecting the two accommodation portions (310).

14. The battery cell (10) of claim 13, wherein the connection portion (315) is formed along an edge of the battery cell and is in close contact with the electrode assembly (100).

15. The battery cell (10) of claim 13, wherein the second battery cell sealing portion (16b) includes:
a second pouch sealing portion head (3221) extending from the accommodation portion (310); and
a second pouch sealing portion tail (3222) extending from the second pouch sealing portion head (3221) and folded.

16. A battery cell (10) comprising:
an electrode assembly (100); and
a pouch unit (300) including an accommodation portion (310) wrapping and accommodating the electrode assembly (100),
wherein the pouch unit (300) includes:
a first pouch sealing portion (321) disposed along a portion of a perimeter of the electrode assembly (100) and extending from the accommodation portion (310), the first pouch sealing portion (321) including a 1-1 outer layer, a 1-1 metal layer, an inner layer, a 2-1 metal layer, and a 2-1 outer layer which are stacked sequentially; and
a second pouch sealing portion (322) extending from at least a part of the first pouch sealing portion (321), the second pouch sealing portion (322) including a 2-1 outer layer, a metal layer, and a 2-2 outer layer which are stacked sequentially.

17. The battery cell (10) of claim 16, wherein the 1-2 outer layer extends from the 1-1 outer layer,
wherein the 2-2 outer layer extends from the 2-1 outer layer, and
wherein the metal layer extends from the 1-1 metal layer and the 2-1 metal layer.

18. The battery cell (10) of claim 16, further comprising an electrode lead (200) extending from the electrode assembly (100) and protruding from the pouch unit (300),
wherein the first pouch sealing portion (321) is connected to the electrode lead (200).

19. The battery cell (10) of claim 16, wherein the accommodation portion (310) includes two accommodation portions (310) that accommodate the electrode assembly (100) and face each other, and
wherein the pouch unit (300) includes a connection portion (315) connecting the two accommodation portions (310).

20. The battery cell (10) of claim 19, wherein the connection portion (315) is formed along an edge of the battery cell (10) and is in close contact with the electrode assembly (100).
